# EUROPEAN PATENT SPECIFICATION

(11) **EP 2 123 145 B1**
(45) Date of publication and mention of the grant of the patent: **03.08.2011**
(21) Application number: 09160602.0
(22) Date of filing: 19.05.2009
(51) Int. Cl.: A01F 15/07, B65B 11/04

(54) **A bale wrapping machine**
Ballenwickelmaschine
Enrubanneuse

(30) Priority: 19.05.2008 IE 20080391
(43) Date of publication of application: 25.11.2009
(73) Proprietor: Idough Investment Company, Co. Carlow (IE)
(72) Inventor: Hourihane, Con, Co. Carlow (IE)
(74) Representative: O'Neill, Aoife

(56) References cited:
- EP-A- 0 208 034
- EP-A- 0 774 413
- US-A1- 2004 089 167

## Description

### Field of the Invention

The invention relates to a wrapping machine, in particular to a bale-wrapping machine, for use in wrapping bales with a plastics wrapping film, of the kind that is suitable for mounting directly onto the rear of a tractor. The invention is particularly concerned with wrapping machines for wrapping bales of agricultural silage, grain, hay, straw, maize, beet pulp, beet tops, and the like (hereinafter referred to as "fodder") with a plastics film, which preferably is air tight and water tight. The device of the invention may also be used in conjunction with machines for compacting and wrapping general farm and agricultural waste products, such as waste plastics and the like, and for wrapping other loose materials and objects such as comminuted peat moss, saw dust, wood shavings, wood chippings, brewery waste, bricks, blocks, cartons and the like.

### Background to the Invention

It has become conventional practice in agriculture to form harvested fodder into cylindrical-shaped bales, and square or rectangular bales, which are then wrapped in a plastics film. This is particularly suitable method of manufacturing silage because the silage is kept air-tight within the wrapped bale which, typically, is wrapped with up to six plies of plastics film. They are commonly called "big round bales". Machines for wrapping cylindrically shaped bales with a plastics film are described, for example, in EP-B-0110110, DE 3642513A, and GB 2193683A,

Bale wrapping machines of the kind described in the aforesaid patents comprise a wheeled chassis that may be towed by a tractor. The chassis carries a tipping platform which carries a pair of spaced apart rollers, each of which rotates about a horizontal axis. An endless belt is stretched between the rollers and rotates with the rollers. In order to wrap a large round bale of fodder material with plastics film, the round bale is lifted onto the platform by means of a lifting arm. The bale rests on the endless belt. The free end of a roll of plastics film is attached to the bale and a rotary support arm for the film dispenser rotates the film dispenser, about a vertical axis, around the bale, while the bale is being turned about a horizontal axis. If no movement of the bale about its longitudinal axis were to occur the bale would merely be wrapped with a single band having the thickness of the width of the plastics film. However, with each rotation of the wrapping arm, the endless belt is caused to move by a predetermined distance which, in turn, causes the bale to roll about its surface, i.e. about a horizontal axis. This rolling of the bale on the belt allows a new area of bale to be wrapped by the film on each rotation of the wrapping arm, thus eventually achieving a complete covering of the bale with a substantial degree of overlap of the plastics film.

In the bale-wrapping machines described above the bale to be wrapped is mounted on rollers that rotate the bale only about the horizontal axis. In this arrangement there is provided a rotary support arm for the film dispenser that rotates the film dispenser, about a vertical axis, around the bale, while the bale is being turned about a horizontal axis. However, it is also known from the prior art, for example in GB 2191984 A, GB 2228246A and EP 0208034A (GB 2159489B), to mount the bale on a turntable that rotates about a vertical axis, and the dispenser for the roll of plastics film is fixed. It is the rotation of the bale about the vertical axis that causes the film to be unrolled from the dispenser.

Bale-wrapping machines as described above are generally provided with a lifting mechanism for lifting the bales onto the platform. Generally, the mechanism comprises a lifting arm for gripping and lifting the bale from the ground on to the machine. In one type of bale-wrapping machine, a separate loading arm is not provided. Instead, the wrapping platform has a gripper or squeeze arm attached to the front portion thereof. The wrapping platform is tilted forwards, and the arm is pivoted inwards to grip the bale. The platform is tilted back to a substantially horizontal position so that the bale rests on the platform. The bale is then wrapped as described above. When the wrapping operation is complete, the wrapping platform is tilted backwards to tip the wrapped bale off the platform and onto the ground.

Because the entire platform must tilt backwards to tip the wrapped bale and then forwards to pick up the next bale, the cycle time between bales can be quite large. A further disadvantage of this arrangement is the location of the gripper arm when the platform is tilted backwards. Because the arm is attached to the platform, it pivots with the platform when the wrapped bale is being discharged. This restricts where the wrap arms may be parked (to avoid collision with the gripper arm).

### Summary of the Invention

The present invention relates to a bale-wrapping machine for wrapping a bale of material with a strip of wrapping material comprising a support frame, a substantially horizontally disposed wrapping platform mounted on the frame, comprising a plurality of rollers adapted to engage a bale for wrapping and for rotating the bale about a substantially horizontal axis, a gripper arm arranged at a front end of the wrapping platform for lifting a bale onto the wrapping platform for wrapping, means for supplying a strip of wrapping material to the bale as the bale is turned about the horizontal axis, characterised in that a front portion of the wrapping platform is tiltable forward to allow the gripper arm to grip a bale to be wrapped, and returnable to a horizontal position to lift the bale onto the wrapping platform for wrapping; and a rear portion of the wrapping platform is tiltable rearward to tip a wrapped bale off the platform.

Specifically, the front and rear portions of the wrapping platform are separately tiltable, such that each portion may be tilted independently of the other.

An advantage of this arrangement is that while the rear portion of the platform is tilting downward to discharge the bale just wrapped, the front portion may also tilt downward to load the next bale onto the platform. This speeds up operation and improves the cycle time of the machine. A further advantage of this arrangement is that the gripper arm is not tilted when the rear portion of the platform is lowered, thereby avoiding any collision between the gripper arm and the wrapping arms.

In one embodiment, each of the front and rear portions of the wrapping platform comprises a roller pivotably mounted on the support frame. Preferably, each roller is mounted for rotation on a roller support frame which is, in turn, pivotably mounted on the frame. Thus, to tilt the front portion of the wrapping platform down, the front roller support frame is pivoted downwards. Similarly, to tilt the rear portion of the wrapping platform down, the rear roller support frame is pivoted downwards.

The bale-wrapping machine may further comprise an end-tipping mechanism, comprising an inclined, tapered frame, arranged such that a wrapped bale rolls down the inclined frame until it reaches a point at which the width of the frame is insufficient to support the bale and the bale is tipped onto one end. A stop may be provided at the end of the frame to ensure that the bale is tipped.

### Brief Description of the Drawings

One embodiment of the invention is hereinafter described with reference to the accompanying drawings wherein:
Figure 1 is a perspective view of a bale-wrapping machine in accordance with the invention, in an initial position;
Figure 2 is a perspective view from above of the bale-wrapping machine of Figure 1, in a loading position;
Figure 3 is a perspective view of the bale-wrapping machine of Figure 1, showing a bale being loaded onto the wrapping platform;
Figure 4 is a perspective view of the bale-wrapping machine of Figure 1, showing a bale in position on the platform;
Figure 5 is a perspective view from the front of the bale-wrapping machine of Figure 1, showing the gripper arm retracted;
Figure 6 is a perspective view of the bale-wrapping machine of Figure 1, in an unloading position; and
Figure 7 is a perspective view from above of the bale-wrapping machine of Figure 1, showing both the front and rear portions of the platform lowered.

### Detailed Description of the Drawings

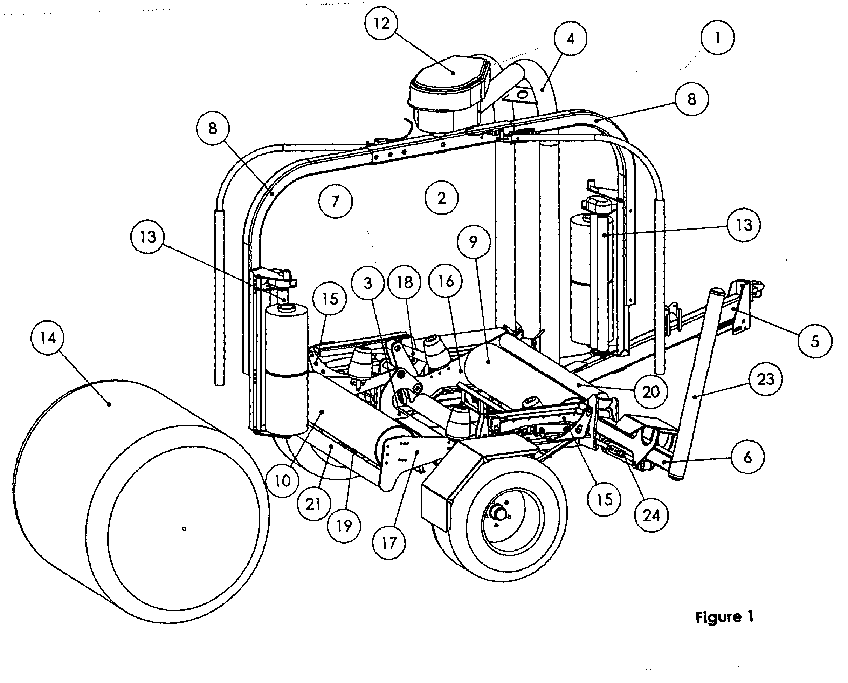

Referring to Figures 1 to 7 of the drawings, there is illustrated a bale-wrapping machine 1 in accordance with the present invention. The machine comprises a support frame 2 having a lower base frame 3 and a pair of tubular masts 4 extending upwardly from the base frame 3. A hitch 5 extends from the base frame 3 by means of which the bale-wrapping machine may be coupled to the rear of a tractor.

A substantially horizontally disposed wrapping platform 7 comprises horizontal rollers 9, 10 adapted to engage a bale for wrapping. When a bale 14 is in position on the wrapping platform, the rollers 9,10 are rotatably driven to rotate the bale about its substantially horizontal axis. The front roller 9 is driven, in a conventional manner, by a hydraulic motor and chain drive. The rear roller may also be driven in a similar manner. Alternatively, the platform may further comprise an endless belt stretched between the rollers 9, 10, such that drive is transferred to the rear roller 10.

In an alternative embodiment, the rear roller 10 may simply be allowed to freewheel with the bale. In a further alternative embodiment, the wrapping platform may comprise several rollers, each of which may be separately driven, or wherein drive may be transferred between the rollers by means of a belt or other similar arrangement.

A pair of rotary wrapping arms 8 are suspended from a drive unit 12 supported on the masts 4. Each of the arms is driven by a hydraulic motor and chain drive within the drive unit 12, and supports a film-dispensing device 13, which is rotated, in a circular path, about the bale 14 to wrap it in a plastics film that is pre-stretched by the dispenser 13, in a well-known manner, as the bale 14 is turned about its substantially horizontal axis by the rollers 9, 10. Known cut-and-tie mechanisms 15 are mounted on the frame 3.

Each of the rollers 9,10 is mounted for rotation on a roller support frame 16, 17. Each of the roller support frames 16, 17 is pivotably mounted on the frame 3. A front cross-tube 20 is provided on the roller support frame 16, adjacent to the front roller 9. A rear cross tube 21 is provided on the roller support frame 17, adjacent to the rear roller 10. Each roller support frame 16, 17 is connected to a hydraulic ram 18, 19 to allow the rollers to be raised and lowered. The front ram 18 is mounted between the support frame 3 and the front roller support frame 16. The rear ram 19 is mounted between the support frame 3 and the rear roller support frame 17.

A gripper arm 6 is pivotably mounted at one end of the front roller support frame 16 such that the arm can move in an arc of approximately 90°. The arm is driven by a hydraulic ram 24 to allow it to be pivoted in under a bale to be wrapped at the front of the machine. The gripper arm further comprises a cross tube 23, so that when it engages a bale to be wrapped, the bale is cradled between the cross tube 23 and the front cross tube 20 of the wrapping platform, thus allowing the bale to be lifted onto the wrapping platform 7.

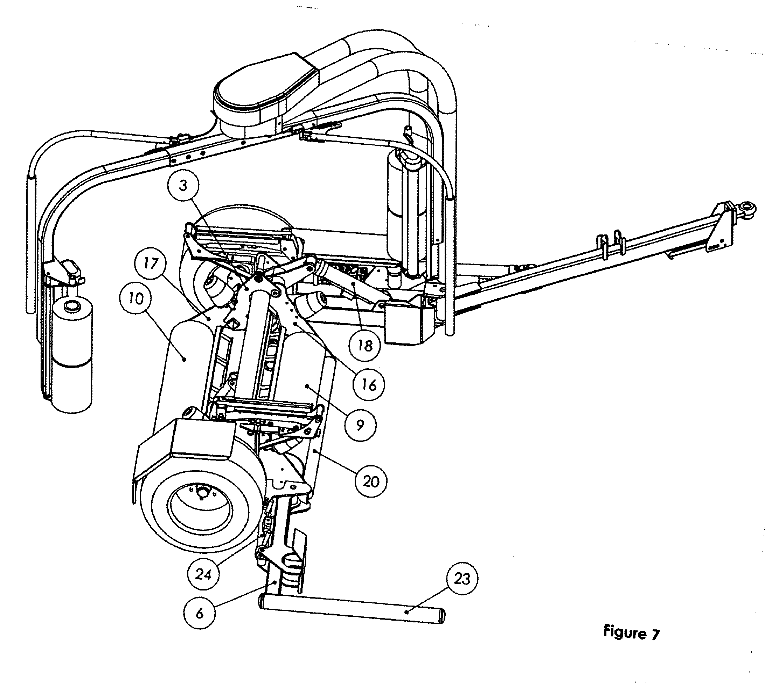

Thus, the front roller 9 is moveable by ram 18 such that a front portion of the platform 7 is tiltable downwards to allow the gripper arm 6 to grip a bale to be wrapped. When the gripper arm has engaged the bale, the front roller is moved back up so that the wrapping platform is returned to a horizontal position and the bale is lifted onto the platform. Similarly, the rear roller 10 is pivotable such that a rear portion of the platform is tiltable downwards to allow the wrapped bale to be tipped off the back of the machine. As shown in Figure 7, the front and rear portions of the wrapping platform are separately tiltable, such that each portion may be tilted or lowered independently of the other. Thus, both rollers 9,10 may be lowered at the same time, allowing loading of a new bale to begin while the wrapped bale is being tipped.

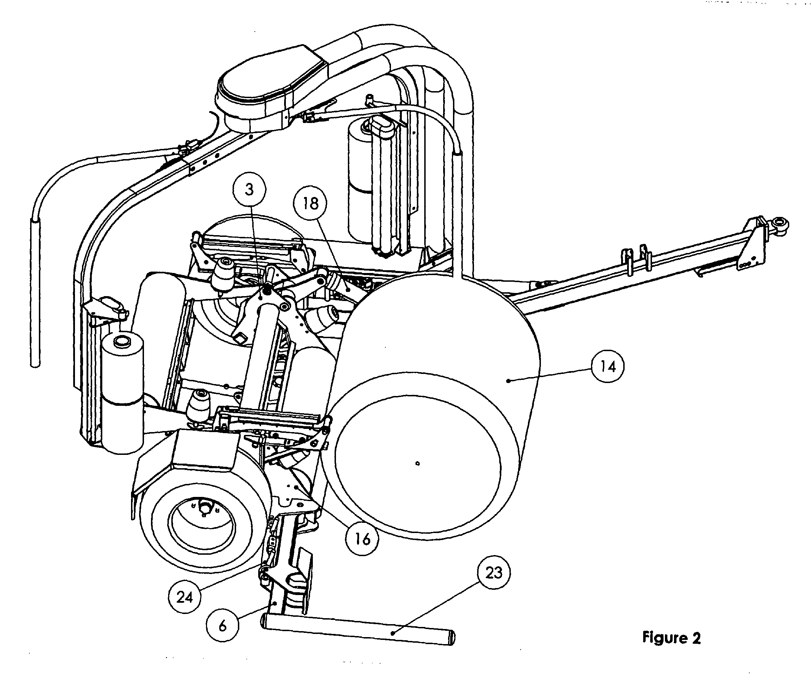

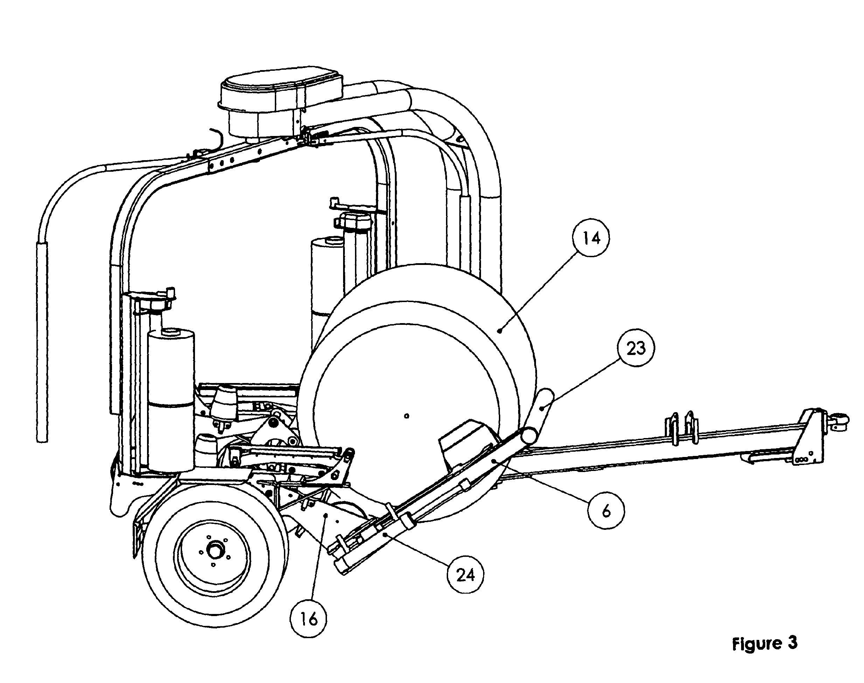

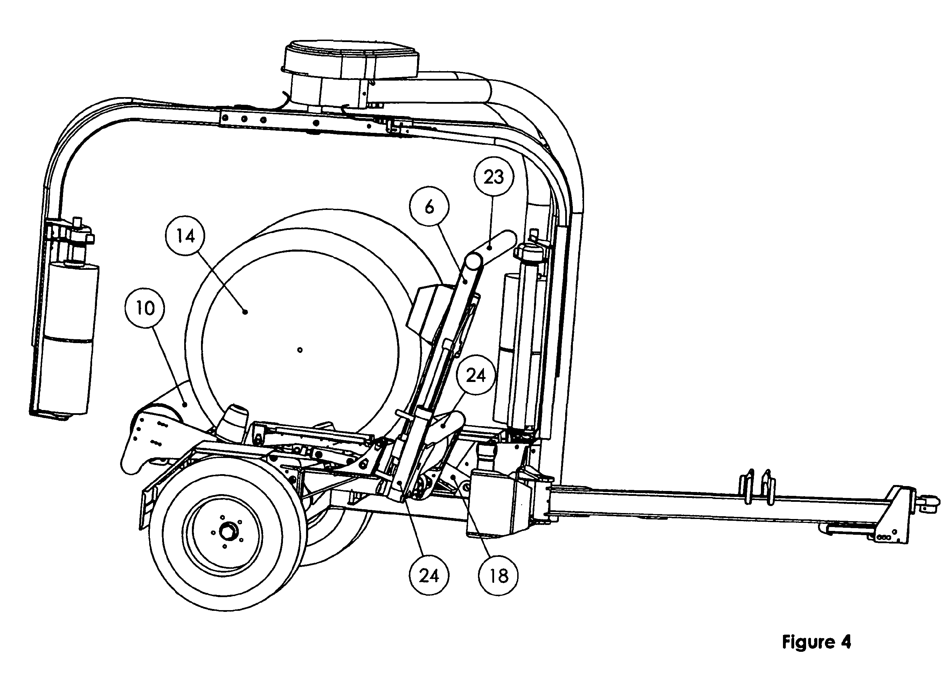

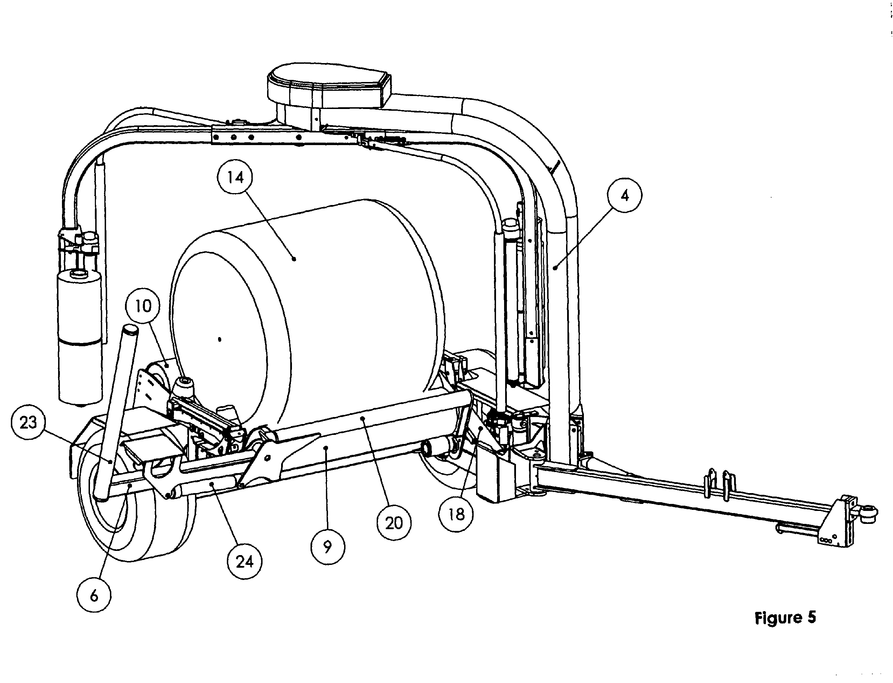

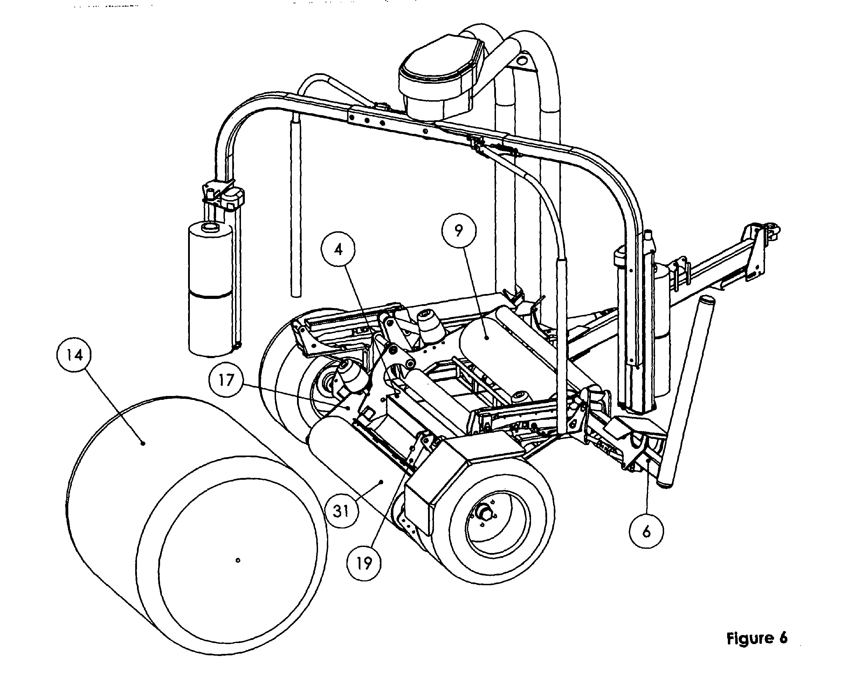

The operation of the bale-wrapping machine will now be described with reference to Figures 1 to 6. Figure 1 shows the bale-wrapping machine according to the present invention with both the front and rear portions of the platform 7 in a substantially horizontal position. Next, the front portion of the platform 7 is dropped to load a bale 14, as shown in Figure 2. As can be seen from the drawing, when the front portion of the platform is tilted downwards, the gripper arm 6 is also tilted down so that it lies adjacent to the bale to be wrapped. Then, the gripper arm 6 is rotated in under the bale to grip the bale between cross tubes 20 and 23 and the front portion of the platform is pivoted upwards to lift the bale off the ground, as shown in Figure 3. The front roller 9 and the gripper arm continue to rise until the bale 14 is in position and the wrapping platform 7 is substantially horizontal, as shown in Figure 4. Next, the gripper arm 6 is retracted back to its original position as shown in Figure 5, so that it does not interfere with the wrapping process. The wrapping arms 8 are driven to rotate the film dispensers 13 around the bale to wrap it in plastic film. At the same time, the bale 14 is turned about its substantially horizontal axis by the rollers 9, 10. When the bale is fully wrapped, the cut-and-tie mechanisms 15 are used to cut the film. Then, the rear portion of the platform 7 is lowered to tip the wrapped bale 14 off the back of the machine, as shown in Figure 6. Because the gripper arm is attached to the front portion of the platform only, the gripper arm is not tilted when the wrapped bale is tipped off, thereby avoiding any collision between the gripper arm and the wrapping arms. The front portion of the platform may also be tilted downwards at this stage as shown in Figure 7, in order to begin loading the next bale.

The words "comprises/comprising" and the words "having/including" when used herein with reference to the present invention are used to specify the presence of stated features, integers, steps or components but does not preclude the presence or addition of one or more other features, integers, steps, components or groups thereof.

From the foregoing, it will be apparent that numerous modifications and variations can be effected without departing from the true spirit and scope of the novel concept of the present invention. It will be appreciated that the present disclosure is intended to set forth the exemplifications of the invention that are not intended to limit the invention to the specific embodiments illustrated. The disclosure is intended to cover by the appended claims all such modifications as fall within the scope of the claims.

Where technical features mentioned in any claim are followed by reference signs, these reference signs have been included for the sole purpose of increasing the intelligibility of the claims and accordingly, such reference signs do not have any limiting effect on the scope of each element identified by way of example by such reference signs.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A bale-wrapping machine for wrapping a bale of material with a strip of wrapping material comprising:
a support frame;
a substantially horizontally disposed wrapping platform mounted on the frame, comprising a plurality of rollers adapted to engage a bale for wrapping and for rotating the bale about a substantially horizontal axis;
a gripper arm arranged at a front end of the wrapping platform for lifting a bale onto the wrapping platform for wrapping;
means for supplying a strip of wrapping material to the bale as the bale is turned about the horizontal axis;
**characterised in that** a front portion of the wrapping platform is tiltable downwards to allow the gripper arm to grip a bale to be wrapped, and returnable to a horizontal position to lift the bale onto the wrapping platform for wrapping; and
a rear portion of the wrapping platform is tiltable downwards to tip a wrapped bale off the platform.

2. A bale-wrapping machine as claimed in claim 1, wherein the front and rear portions of the wrapping platform are separately tiltable, such that each portion may be tilted independently of the other.

3. A bale-wrapping machine as claimed in claim 1 or claim 2, wherein each of the front and rear portions of the wrapping platform comprises a roller pivotably mounted on the support frame.

4. A bale-wrapping machine as claimed in claim 3, wherein each roller is mounted for rotation on a roller support frame which is, in turn, pivotably mounted on the support frame.

5. A bale-wrapping machine as claimed in any preceding claim, further comprising an end-tip mechanism, the end-tip mechanism comprising an inclined, tapered frame, arranged such that a wrapped bale rolls down the inclined frame until it reaches a point at which the width of the frame is insufficient to support the bale and the bale is tipped onto its end.

6. A bale-wrapping machine as claimed in claim 5, wherein a stop is provided at the end of the frame to ensure that the bale is tipped.

## Patentansprüche

1. Ballenwicklungsmaschine zum Wickeln eines Ballens aus Material mit einem Streifen Wickelmaterial, aufweisend:
einen Stützrahmen;
eine im Wesentlichen horizontal angeordnete Wickelplattform montiert an dem Rahmen, aufweisend eine Vielzahl von Rollen geeignet zum Erfassen eines Ballens zum Wickeln und zum Rotieren des Ballens um eine im Wesentlichen horizontale Achse;
einen Greifarm angeordnet an einem vorderen Ende der Wickelplattform zum Heben eines Ballens auf die Wickelplattform zum Wickeln;
Mittel zum Liefern eines Streifens von Wickelmaterial zu dem Ballen während der Ballen sich um die horizontale Achse dreht;
**dadurch gekennzeichnet, dass** ein vorderer Bereich der Wickelplattform nach unten kippbar ist um dem Greifarm zu erlauben, einen zu wickelnden Ballen zu greifen, und zurückkehrbar ist in eine horizontale Position um den Ballen zum Wickeln auf die Wickelplattform zu heben; und
ein hinterer Bereich der Wickelplattform nach unten kippbar ist um einen gewickelten Ballen von der Plattform zu weisen.

2. Ballenwicklungsmaschine nach Anspruch 1, wobei die vorderen und hinteren Bereiche der Wickelplattform einzeln kippbar sind, so dass jeder Bereich unabhängig von dem anderen gekippt werden kann.

3. Ballenwicklungsmaschine nach Anspruch 1 oder 2, wobei jeder der vorderen und hinteren Bereiche der Wickelplattform eine an dem Stützrahmen schwenkbar montierte Rolle aufweist.

4. Ballenwicklungsmaschine nach Anspruch 3, wobei jede Rolle zur Rotation an einem Rollenträgerrahmen montiert ist, welcher wiederum an dem Stützrahmen schwenkbar montiert ist.

5. Ballenwicklungsmaschine nach einem der vorhergehenden Ansprüche, weiterhin aufweisend einen End-Kipp-Mechanismus, welcher einen geneigte, sich verjüngenden Rahmen aufweist, so dass ein gewickelter Ballen den geneigten Rahmen nach unten rollt bis er einen Punkt erreicht, an dem die Breite des Rahmens nicht ausreicht um den Ballen zu stützen und der Ballen auf sein Ende kippt.

6. Ballenwicklungsmaschine nach Anspruch 5, wobei an dem Ende des Rahmens eine Haltevorrichtung vorgesehen ist, um sicherzustellen, dass der Ballen kippt.

## Revendications

1. Enrubanneuse de balles destinée à enrubanner une balle de matière avec une bande de matière d'enrubannage, comprenant :
un châssis support ;
une plate-forme d'enrubannage disposée sensiblement horizontalement montée sur le châssis et comprenant une pluralité de rouleaux adaptés pour attaquer une balle à enrubanner et pour faire tourner la balle autour d'un axe sensiblement horizontal;
un bras preneur agencé à une extrémité avant de la plate-forme d'enrubannage pour élever une balle jusque sur la plate-forme d'enrubannage pour l'enrubanner;
des moyens pour acheminer une bande de matière d'enrubannage à la balle en même temps que la balle est mise en rotation autour de l'axe horizontal;
**caractérisée en ce qu'**une partie avant de la plate-forme d'enrubannage peut être inclinée vers le bas pour permettre au bras preneur de saisir une balle à enrubanner et peut être ramenée à une position horizontale pour élever la balle jusque sur la plate-forme d'enrubannage pour l'enrubannage ;
une partie arrière de la plate-forme d'enrubannage peut être inclinée vers le bas pour déverser une balle enrubannée hors de la plate-forme.

2. Enrubanneuse de balles selon la revendication 1, dans laquelle les parties avant et arrière de la plate-forme d'enrubannage peuvent être inclinées séparément, de sorte que chaque partie peut être inclinée indépendamment de l'autre.

3. Enrubanneuse de balles selon la revendication 1 ou 2, dans laquelle chacune des parties avant et arrière de la plate-forme d'enrubannage comprend un rouleau monté pivotant sur le châssis support.

4. Enrubanneuse de balles selon la revendication 3, dans laquelle chaque rouleau est monté pour tourner sur un châssis support de rouleau qui est à son tour monté pivotant sur le châssis support.

5. Enrubanneuse de balles selon une quelconque des revendications précédentes, comprenant en outre un mécanisme de déversement en position debout, le mécanisme de déversement en position debout comprenant un châssis incliné, de forme effilée, agencé de telle manière qu'un balle enrubannée descende en roulant le long du châssis incliné jusqu'à ce qu'elle atteigne un point où la largeur du châssis est insuffisante pour supporter la balle et où la balle est déversée en position debout.

6. Enrubanneuse de balles selon la revendication 5, dans laquelle une butée est prévue à l'extrémité du châssis pour assurer que la balle sera déversée.
